(19) Europäisches Patentamt
European Patent Office
Office européen des brevets

(11) **EP 1 543 665 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **03750295.2**

(22) Anmeldetag: **28.08.2003**

(51) Int Cl.:
**H04L 27/26** *(2006.01)*

(86) Internationale Anmeldenummer:
**PCT/DE2003/002866**

(87) Internationale Veröffentlichungsnummer:
**WO 2004/030302 (08.04.2004 Gazette 2004/15)**

(54) **VORRICHTUNG UND VERFAHREN ZUR ERKENNUNG EINES NUTZSIGNALS IN EINEM EMPFÄNGER**

DEVICE AND METHOD FOR IDENTIFYING A USEFUL SIGNAL IN A RECEIVER

DISPOSITIF ET PROCEDE POUR IDENTIFIER UN SIGNAL UTILE DANS UN RECEPTEUR

(84) Benannte Vertragsstaaten:
**DE FR GB IT**

(30) Priorität: **26.09.2002 DE 10245039**

(43) Veröffentlichungstag der Anmeldung:
**22.06.2005 Patentblatt 2005/25**

(73) Patentinhaber:
• **Infineon Technologies AG**
**81669 München (DE)**
• **Marsili, Stefano**
**9586 Fürnitz (AT)**

(72) Erfinder: **MARSILI, Stefano**
**A-9586 Fürnitz (AT)**

(74) Vertreter: **Patentanwälte Lambsdorff & Lange**
**Dingolfinger Strasse 6**
**81673 München (DE)**

(56) Entgegenhaltungen:
**EP-A- 1 093 268**        **EP-A- 1 179 901**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Vorrichtung und ein Verfahren zur Erkennung eines Nutzsignals in einem Empfänger, insbesondere Funkempfänger.

In drahtlosen lokalen Netzwerken werden mittlerweile Datenübertragungsraten von bis zu 54 MBit pro Sekunde erreicht. Die Spezifikationen hierzu finden sich in "IEEE 802.11a - Part 11: Wireless LAN Medium Access Control (MAC) and Physical Layer (PHY) specifications: High-speed Physical Layer in the 5 GHZ Band" sowie "IEEE 802.11g - Part 11: Wireless LAN Medium Access Control (MAC) and Physical Layer (PHY) specifications: Further Higher Speed Physical Layer Extension in the 2,4 GHz Band" oder auch in "ETSI TS 101 761-1 Broadband Radio Access Networks (BRAN); Hiperlan Type 2; Physical (PHY) Layer". Zur Erkennung eines Nutzsignals wird nach einem periodischen Signal gesucht, welches am Anfang eines Datenbursts des Nutzsignals ausgesendet wird.

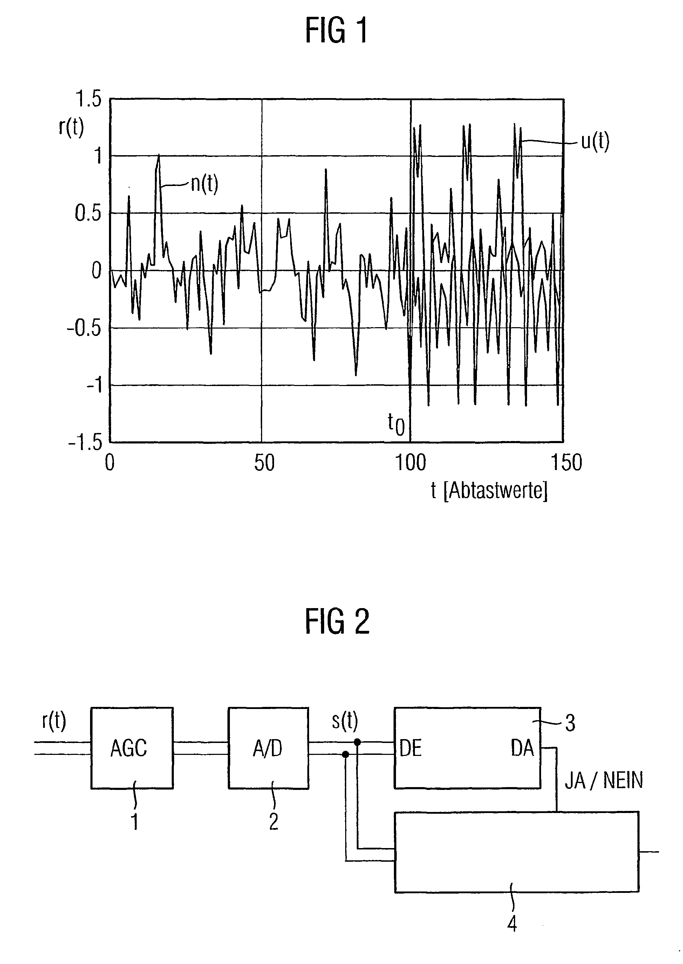

In Figur 1 ist ein Zeitdiagramm gezeigt, bei dem ab einem bestimmten Zeitpunkt $t_0$ zusätzlich zu einem Rausch-signal n(t) ein periodisches Signal u(t) mit definierter Periode auftritt. Auf der x-Achse des Diagramms ist dabei die Zeit in Einheiten einer Abtastzeitdauer, d.h. der Abtastindex, und auf der y-Achse die Amplitude des Gesamtsignals r(t) bestehend aus dem Rauschsignal n(t) und dem periodischen Signal u(t) aufgetragen. Mittels eines Signaldetektors ist das Auftreten des dem Rauschsignal n(t) überlagerten periodischen Signals u(t) zu detektieren. Wenn der Signaldetektor fehlerfrei arbeitet, muss er bis zum Zeitpunkt $t_0$ feststellen, dass kein periodisches Signal u(t) vorhanden ist. Die Wahrscheinlichkeit einer fehlerhaften Detektion des periodischen Signals muss in diesem Zeitraum möglichst gering sein. Nachdem das periodische Signal u(t) zum Zeitpunkt $t_0$ aufgetreten ist, muss der Signaldetektor andererseits so schnell wie möglich das Vorhandensein des periodischen Signals u(t) nachweisen. Die Fehlerrate soll dabei ebenfalls so gering wie möglich sein. Das periodische Signal u(t) und damit das Nutzsignal soll beispielsweise innerhalb von 4 $\mu$s mit einer Wahrscheinlichkeit von 90 % nachgewiesen werden.

Eine mögliche Verwendung eines solchen Signaldetektors ist in Figur 2 gezeigt. Das analoge komplexe Signal r(t), welches das Rauschsignal n(t) enthält und das periodische Signal u(t) enthalten kann, wird mittels eines Verstärkers mit automatischer Verstärkungsanpassung 1 skaliert und einem Analog-Digital-Wandler 2 zugeführt. Das am Ausgang des Analog-Digital-Wandlers 2 abgreifbare digitale komplexe Signal s(t) wird dem Signaldetektor 3 zugeführt. Zudem wird das Signal s(t) einem Empfänger 4 zugeführt. Der Signaldetektor 3 teilt dem Empfänger 4 über ein am Detektorausgang DA anliegendes Signal mit, ob ein periodisches Signal detektiert wurde.

Weil der Verstärker mit automatischer Verstärkungsanpassung 1, im folgenden auch Automatic Gain Control (AGC) genannt, die Gesamtleistung verändert, genügt es für die Detektion des periodischen Signals u(t) nicht, nur die Leistungsveränderung des Signals s(t) zu überwachen. Der Verstärker mit automatischer Verstärkungsanpassung 1 passt die Signalverstärkung von Zeit zu Zeit den Bedürfnissen an. Daher schwankt die Leistung am Eingang des Analog-Digital-Wandlers 2 und damit auch am Eingang DE des Signaldetektors 3, weshalb die Veränderung der Leistung im Eingangssignal s(t) keine verlässliche Aussage über das Vorhandensein oder die Abwesenheit des periodischen Signals u(t) zulässt.

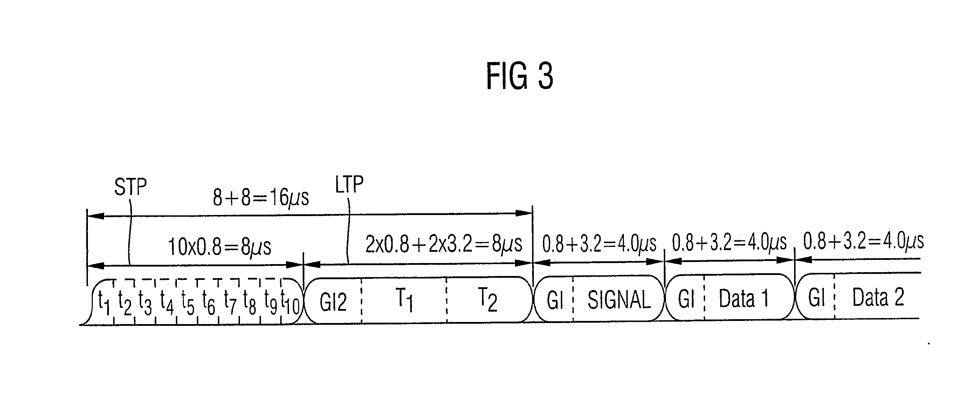

In Figur 3 ist die Burststruktur gezeigt, wie sie in der oben genannten IEEE-Spezifikation definiert ist und zur Datenübertragung sowie zur Synchronisation zwischen Sender und Empfänger dient. Die Burststruktur beginnt mit einer aus kurzen Trainingssequenzen aufgebauten Präambel STP, welche auch als PLCP-Präambel oder OFDM training structur bezeichnet wird. Ein 0,8 $\mu$s langes Signal (kurze Trainingssequenz), in Figur 3 mit $t_1$ bezeichnet, wird innerhalb STP 10 mal für insgesamt 8 $\mu$s wiederholt. In Figur 3 sind die Wiederholungen mit $t_2$, $t_3$, ..., $t_{10}$ gekennzeichnet. Daran schließen sich eine aus einer Schutzzeit GI2 und zwei langen Trainingssequenzen T1 und T2 aufgebaute Präambel LTP an. LTP erstreckt sich ebenfalls über 8 $\mu$s. Da es auf LTP und die LTP nachfolgenden Burst-Abschnitte SIGNAL, Data1, Data2 nicht ankommt, wird im Folgenden darauf auch nicht weiter eingegangen. Erläuterungen hierzu finden sich im Abschnitt 17.3 der oben genannten Spezifikation IEEE 802.11a.

Zur empfängerseitigen Erkennung eines Bursts wird das periodische Signal $t_1$, $t_2$, ..., $t_{10}$ der Präambel STP verwendet. Um das periodische Signal im Signal s(t) zu detektieren, kann man die Ähnlichkeit des periodischen Signals $t_1$, $t_2$, ..., $t_{10}$ mit sich selbst bei einer Verschiebung entsprechend der Signalperiode ausnutzen. Für den Fall, dass kein periodisches Signal vorliegt, sollte das Signal s(t) auch keine Periodizität aufweisen.

In der zweiten oben erwähnten Spezifikationen ETSI wird die kurze Trainingssequenz etwas anders definiert, die Periodizität des periodischen Signals ist hier jedoch ebenfalls gegeben. Es sei hier auf die Spezifikationsabschnitte 5.7 und 5.8 verwiesen. Daher kann die Detektion des periodischen Signals u(t), welches dem Rauschsignal n(t) überlagert ist, auch bei dieser Spezifikation auf die gleiche Art und Weise erfolgen.

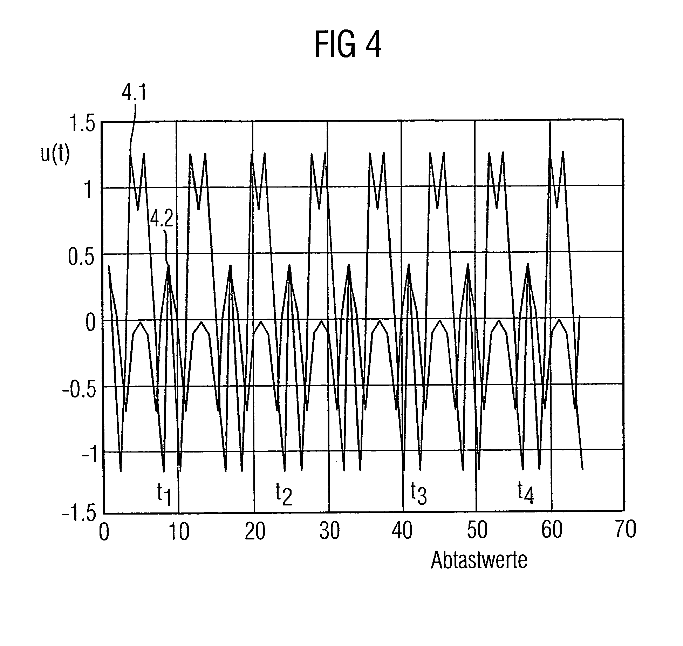

In Figur 4 ist in Form eines Zeitdiagramms, bei dem auf der x-Achse der Abtastwerte-Index und auf der y-Achse die Amplitude in beliebigen Einheiten aufgetragen sind, der Realteil 4.1 und der Imaginärteil 4.2 von insgesamt 4 Signalen $t_1$ bis $t_4$ dargestellt. Die Abtastrate beträgt 20 MHz, d.h. 16 Abtastwerte entsprechen einer Wiederholungsdauer (0,8 $\mu$s) des periodischen Signals u(t). Mittels des Signaldetektors 3 sollten die in Figur 4 gezeigten Signale $t_1$ bis $t_4$ des periodischen Signals detektierbar sein.

Aus dem Stand der Technik "VLSI Implementation of IEEE 802.11a Physical Layer, L. Schwoerer, H. Wirz, Nokia Research Center, 6th International OFDM Workshop 2001 - Hamburg, Seiten 28-1 bis 28-4" ist ein Signaldetektor bekannt, der zur Detektion des periodischen Signals folgende Autokorrelationsfunktion verwendet:

$$c_1(t) = \left| \sum_{t_i}^{t_i+T} s(t)s^*(t - \tau) \right| \qquad (1)$$

Dabei ist $\tau = 0,8\ \mu$s die Periode des periodischen Signals u(t) und T die Integrations- bzw. Summationszeitdauer.

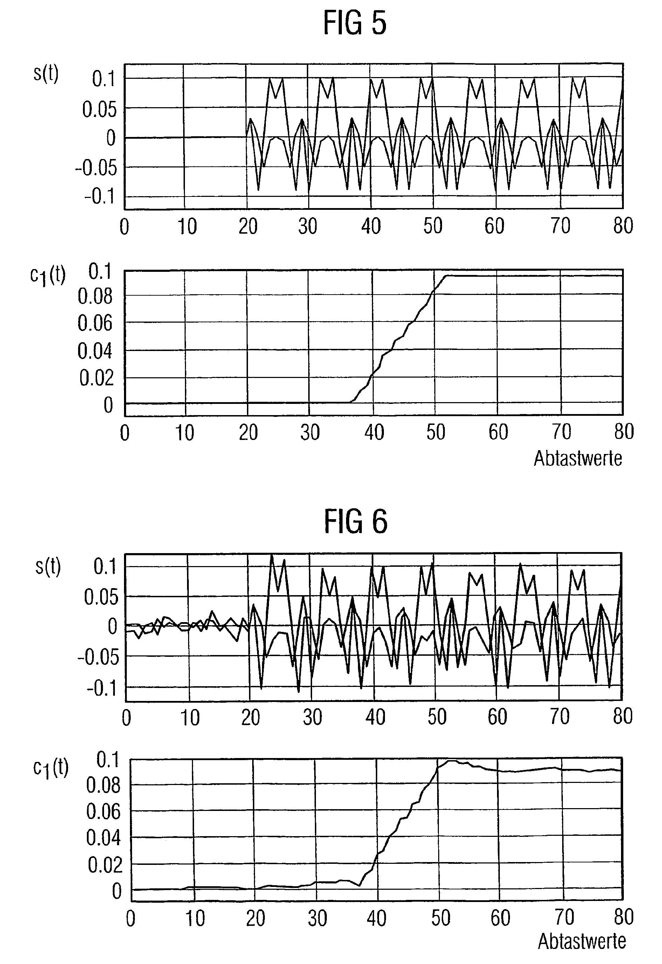

In Figur 5 sind zwei Zeitdiagramme dargestellt, bei denen jeweils auf der x-Achse der Abtastwerte-Index und auf der y-Achse die Amplitude aufgetragen sind. Im oberen Diagramm ist das digitale komplexe Signal s(t) dargestellt. Beim Abtastwerte-Index 20 tritt das periodische Signal u(t) auf. Im unteren Diagramm ist die Autokorrelationsfunktion $c_1(t)$, wie sie oben in Gleichung (1) angegeben ist, gezeigt. Dabei beinhaltet das Signal s(t) kein Rauschsignal. Die Integrations- bzw. Summationszeitdauer T beträgt 0,8 $\mu$s. Nach 1,6 $\mu$s (entspricht 32 Abtastungen) korrelieren die letzten 0,8 $\mu$s des Signals s(t) mit den ersten 0,8 $\mu$s des Signals s(t) perfekt und die Autokorrelationssumme bleibt 1,6 $\mu$s nach dem Auftreten des periodischen Signals konstant.

In Figur 6 sind ebenfalls zwei Zeitdiagramme gezeigt, wobei das obere Zeitdiagramm wiederum das Signal s(t) und das untere Zeitdiagramm die Autokorrelationsfunktion $c_1(t)$ zeigt. Die Abtastrate beträgt wiederum 20 MHz. Hierbei weist das Signal s(t) nun jedoch einen Rauschsignalanteil auf. Der Autokorrelationswert $c_1(t)$ ist nunmehr nicht mehr stabil. Zudem weicht der Autokorrelationswert $c_1(t)$ auch bereits vor dem Auftreten des periodischen Signals vom Wert 0 ab. Um das periodische Signal sicher zu detektieren, ist ein Schwellenwert zu berücksichtigen. Überschreitet der Autokorrelationswert $c_1(t)$ den Schwellenwert, wird angenommen, dass das periodische Signal vorliegt. Je höher der Schwellenwert ist, desto kleiner ist die Wahrscheinlichkeit, dass die Autokorrelation gemäß der oben genannten Funktion $c_1(t)$ fälschlicherweise ein periodisches Signal detektiert. Dies hat jedoch zur Folge, dass es um so länger dauert, bis das periodische Signal detektiert ist, je höher der Schwellenwert thr_ac ist.

Der Wert der Autokorrelation $c_1(t)$ hängt zudem von der Leistung des Signals s(t) ab. Der Schwellenwert muss daher der Signalleistung angepasst werden. Der Mittelwert der Leistung des Signals s(t) ist nicht konstant, weil der Verstärker mit veränderlicher Verstärkung 1, welcher vor dem Signaldetektor 3 angeordnet ist, versucht, das Ausgangssignal innerhalb eines Intervalls zu halten. Dies ist erforderlich, um eine Übersteuerung des Analog-Digital-Wandlers 2 zu vermeiden. Auch wenn das Eingangssignal r(t), wie in Figur 2 gezeigt, eine konstante mittlere Leistung aufweist, ist es nicht möglich, den Verstärker mit anpassbarer Verstärkung 1 sofort auf den richtigen Wert einzustellen. Dazu sind erst eine Reihe von Einstellungen erforderlich. Infolge der Veränderung der Verstärkung treten also in jedem Fall Schwankungen in der mittleren Leistung des Signals s(t) am Eingang des Signaldetektors 3 auf. Hinzu kommt, dass der Verstärker mit anpassbarer Verstärkung 1 normalerweise erst dann auf einen festen Endwert eingestellt wird, wenn das periodische Signal detektiert wurde und das Nutzsignal empfangen wird. Daher muss die Leistung während des Detektionsprozesses geschätzt werden. Im Stand der Technik wird zur Schätzung der Leistung des Signals s(t) die folgende Formel verwendet:

$$p(t) = \left| \sum_{t_i}^{t_i+T} s(t)s^*(t) \right| \qquad (2)$$

Die Leistung p(t) wird über die letzten T Sekunden des bei der Autokorrelation verwendeten Signals s(t) geschätzt.

Die Entscheidung, ob das periodische Signal vorliegt oder nicht vorliegt, wird mittels der Bedingung

$$c_1(t) \geq p(t) * thr\_ac \qquad (3)$$

getroffen. Dabei bezeichnet thr_ac den (nicht Leistungsskalierten) Schwellenwert für die Autokorrelation. Falls $c_1(t)$ größer oder gleich dem Produkt aus Leistung p(t) und Schwellenwert thr_ac ist, wird angenommen, dass ein periodisches Signal vorliegt.

Die Höhe des Schwellenwerts thr_ac ist dabei das Ergebnis einer Abwägung zwischen der gewünschten hohen Detektionssicherheit des periodischen Signals und einer andererseits möglichst schnellen Detektion des periodischen Signals.

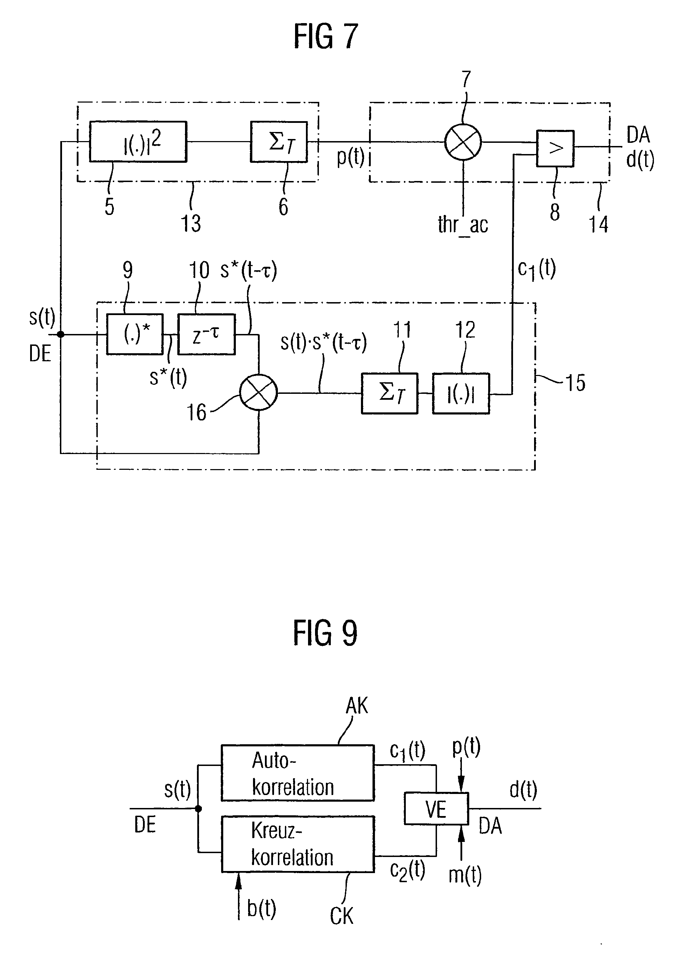

Das Blockdiagramm in Figur 7 zeigt den Aufbau eines Signaldetektors 3, welcher die im oben genannten Stand der Technik angegebenen Gleichungen umsetzt. Die dicken Linien kennzeichnen komplexe Signale, während die dünnen Linien reelle Signale kennzeichnen.

Der Signaldetektor 3, wie er in Figur 7 als Blockschaltbild gezeigt ist, weist einen Eingang DE auf, an dem das Eingangssignal s(t), welches das digitale komplexe Ausgangssignal des Analog-Digital-Wandlers 2 ist, anliegt. Das Eingangssignal s(t) wird einer Einheit zur Leistungsschätzung 13 zugeführt, die an ihrem Ausgang das Leistungsschätzsignal p(t), welches nach Gleichung (2) berechnet wurde, zur Verfügung stellt. Hierzu weist die Einheit zur Leistungsschätzung 13 eine Einheit zur Betragsquadratbildung 5 und einen Summierer 6 auf. Gleichzeitig wird das Signal s(t) einer Autokorrelationseinheit 15 zugeführt. Die Autokorrelationseinheit 15 umfast eine Einheit 9 zur Bildung des konjungiert komplexen Signals, eine Verzögerungseinheit 10 zur Verzögerung des Signals s(t) um die Periode τ, sowie einen Multiplizierer 16, welcher das Signal s(t) mit dem verzögerten, komplex konjungierten Signal s*(t-τ) multipliziert. Hinter dem Multiplizierer 16 sind ein Summierer 11 mit der Summierzeitdauer T und eine Einheit zur Betragsbildung 12 angeordnet. Der Ausgang der Autokorrelationseinheit 15 ist mit einem ersten Eingang einer Entscheidungseinheit 14 verbunden. An einem zweiten Eingang der Entscheidungseinheit 14 liegt der Schwellenwert thr_ac an. Ein dritter Eingang der Entscheidungseinheit 14 ist mit dem Ausgang der Einheit zur Leistungsschätzung 13 verbunden. Die Skalierung des Schwellenwertes thr_ac erfolgt mittels des Multiplizierers 7. Die Überprüfung der Schwellenwertbedingung gemäß Gleichung (3) wird durch den Vergleicher 8 vorgenommen. Am Ausgang DA des Signaldetektors 3 ist ein Detektorsignal d(t) abgreifbar, welches angibt, ob ein periodisches Signal detektiert wurde.

Die Verwendung der Autokorrelation zur Signaldetektion hat den Vorteil, dass die Form des periodischen Signals nicht bekannt sein muss, um das periodische Signal zu detektieren. Zur Detektion des periodischen Signals muss lediglich dessen Periode τ bekannt sein. Bei stark verzerrenden oder störenden Übertragungskanälen wird die Form des empfangenen Signals in erheblichem Maße gegenüber dem ausgesendeten Signal verändert. Die Periode des ausgesendeten Signals bleibt jedoch erhalten. Bei diesen Übertragungsverhältnissen ist das Signalzu-Rauschverhältnis (signal to noise ratio SNR), das benötigt wird, damit der Empfänger korrekt arbeitet, normalerweise relativ hoch - jedenfalls aber so hoch, dass die Signaldetektion durch Autokorrelation ohne weiteres gelingt. Mit anderen Worten: Bei einem stark verzerrenden Kanal besteht die Schwierigkeit nicht darin, das Vorhandensein des (stark verzerrten) Nutzsignals durch Autokorrelation im Detektor nachzuweisen, sondern das Nutzsignal im Empfänger 4 zu dekodieren.

Anders liegen die Verhältnisse bei einem annähernd idealen Übertragungskanal. In diesem Fall kann das SNR, das für die Funktionsfähigkeit des Empfängers erforderlich ist, sehr niedrig liegen, gegebenenfalls bis zu 0 dB. Das heisst, dass der Empfänger ein stark verrauschtes Nutzsignal noch dekodieren kann. Es kann die Situation auftreten, dass der Empfänger das nahezu verzerrungsfreie, stark verrauschte Nutzsignal zwar dekodieren könnte, aber der Detektor, der die Autokorrelation durchführt, nicht im Stande ist, das Vorliegen des Nutzsignals anzuzeigen. Mit anderen Worten: Bei einem annähernd idealen Kanal besteht die Schwierigkeit in der Signalrkennung (Nachweis des Vorliegens des Nutzsignals) im Signaldetektor 3, nicht in der anschließenden Signal-Dekoierung im Empfänger 4.

Durch die Schwierigkeiten bei der Signalerkennung wird die Performance des Systems bestehend aus Empfänger 4 und Detektor 3 beeinträchtigt. Empfänger 4 und Detektor 3 bilden ein Gesamtsystem, welches gleichsam eine erhöhte Fehlerrate aufweist. Die erhöhte Fehlerrate hat in nachteiliger Weise zusätzliche Wiederholungsübertragungen zur Folge. Letztlich bewirkt dies eine Verminderung des Datendurchsatzes für das Gesamtsystem.

Die Dokumente EP-A-1 179 901 und EP-A-1 093 268 offenbaren Empfänger mit Auto- und Kreuzkorrelationseinheiten.

Eine Aufgabe der Erfindung ist es, eine Vorrichtung und ein Verfahren zur Erkennung eines Nutzsignals anzugeben, die bzw. das auch bei unterschiedlichen Kanalverhältnissen eine gute Performance des Gesamtsystems ermöglicht. Insbesondere soll das Nutzsignal auch bei einem verzerrungsarmen aber stark rauschbehafteten Kanal sowohl sicher als auch schnell mit möglichst geringem Implementierungsaufwand erkannt werden.

Die Aufgabe wird durch eine Vorrichtung zur Erkennung eines Nutzsignals mit den im Anspruch 1 angegebenen Merkmalen und durch ein Verfahren zur Erkennung eines Nutzsignals mit den im Anspruch 8 angegebenen Merkmalen gelöst.

Die erfindungsgemäße Vorrichtung zur Erkennung des Vorhandenseins eines Nutzsignals, in welchem ein periodisches Signal enthalten ist, umfasst demnach eine Autokorrelationseinheit zum Autokorrelieren eines Signals, in welchem das Nutzsignal vorhanden sein kann, eine Kreuzkorrelationseinheit zum Kreuzkorrelieren des Signals mit einem bekannten Signal und eine Verknüpfungseinheit zur Verknüpfung der Ausgänge der Autokorrelationseinheit und der Kreuzkorrelationseinheit, die ein Verknüpfungssignal ausgibt, welches angibt, ob das Nutzsignal in dem Signal vorhanden ist.

Das erfindungsgemäße Verfahren zur Erkennung des Vorhandenseins eines Nutzsignals, in welchem ein periodisches Signalenthalten ist, weist folgende Schritte auf. Ein Signal, in welchem das Nutzsignal vorhanden sein kann, wird mittels einer Autokorrelation mit einer verzögerten Version von sich selbst korreliert und ein Autokorrelationssignal gebildet. Zudem wird das Signal mittels einer Kreuzkorrelation mit einem bekannten Signal korreliert und ein Kreuzkorrelationssignal gebildet. Anschließend werden das Autokorrelationssignal und das Kreuzkorrelationssignal miteinander verknüpft und ein Verknüpfungssignal gebildet, das angibt, ob das Nutzsignal in dem Signal vorhanden ist.

Der Grundgedanke der Erfindung besteht darin, die bereits bekannte Nutzsignal-Erkennung mittels Autokorrelation durch eine Nutzsignal-Erkennung mittels Kreuzkorrelation zu erweitern. Kreuzkorrelationsprozeduren sind an sich bekannt, werden in Mobilfunkempfängern typischerweise jedoch für Synchronisationsaufgaben und nicht für die Signaldetektion (Nachweis des Vorhandenseins eines Nutzsignals) eingesetzt.

Der wesentliche Vorteil der Kreuzkorrelation gegenüber der Autokorrelation besteht bei stark rauschbehafteten Signalen darin, dass das bekannt Signal keinen Rauschbeitrag liefert und infolgedessen kein Produkt wie in der Gleichung (1) auftritt, in welchem zwei rauschbehaftete Faktoren s(t) und s*(t-τ) miteinander multipliziert werden. Dadurch wird eine bessere Rauschfestigkeit bei der Signalerkennung erreicht.

Vorteilhafte Weiterbildungen der Erfindung ergeben sich aus den in den abhängigen Ansprüchen angegebenen Merkmalen.

Vorzugsweise umfasst die erfindungsgemäße Vorrichtung eine Amplitudenschätzeinheit zur Schätzung der Amplitude des Signals (s(t)), wobei das von der Amplitudenschätzeinheit ausgegebene Amplitudenschätzssignal der Verknüpfungseinheit zugeführt ist. Auf diese Weise kann erreicht werden, dass variierende Signalstärken keinen oder nur einen sehr geringen Einfluß auf die Nutzsignalerkennung haben.

Gemäß einer weiteren bevorzugten Ausgestaltung der Erfindung umfasst die Verknüpfungseinheit eine der Autokorrelationseinheit nachgeschaltete erste Entscheidungseinheit, welche ein erstes logisches Signal ausgibt, das angibt, ob das Nutzsignal durch Autokorrelation erkannt wurde, eine der Kreuzkorrelationseinheit nachgeschaltete zweite Entscheidungseinheit, welche ein zweites logisches Signal ausgibt, das angibt, ob das Nutzsignal durch Kreuzkorrelation erkannt wurde, und ein den beiden Entscheidungseinheiten nachgeschaltetes ODER-Glied, das das Verknüpfungssignal ausgibt. Eine solche Verknüpfungseinheit weist einen geringen Implementierungsaufwand auf.

Alternativ hierzu kann die Verknüpfungseinheit auch so ausgebildet sein, dass nur eine einzige Schwellenwertentscheidung durchgeführt wird. In diesem Fall werden das Ausgangssignal der Autokorrelationseinheit und das Ausgangssignal der Kreuzkorrelationseinheit jeweils gewichtet und die gewichteten Ausgangssignale zur Erzeugung des Verknüpfungssignals verknüpft, z.B. addiert, und der Schwellenwertentscheidung unterzogen.

Die erfindungsgemäße Vorrichtung und das Verfahren können vorzugsweise in einem drahtlosen lokalen Netzwerk, insbesondere gemäß dem Standard IEEE 802.11a oder dem Standard IEEE 802.11g oder dem Standard ETSI TS 101 761-1 (BRAN), Hiperlan Typ2, eingesetzt werden.

Nachfolgend wird die Erfindung anhand eines Ausführungsbeispiels unter Bezugnahme auf die Zeichnung beschrieben; in dieser zeigt:

Fig. 1      ein Zeitdiagramm eines auszuwertenden Rauschsignals, dem ein periodisches Signal überlagert ist;

Fig. 2      ein Blockschaltbild einer Anwendungsmöglichkeit eines Signaldetektors zur Detektion des periodischen Signals;

Fig. 3      eine Burststruktur, wie sie in der IEEE-Spezifikation beschrieben ist;

Fig. 4      ein Zeitdiagramm des Signals bei der Aussendung der Trainingssequenz-Präambel aus Figur 3;

Fig. 5      den Signalverlauf eines am Eingang des Signaldetektors anliegenden Signals und den dazugehörigen Verlauf der Autokorrelationsfunktion;

Fig. 6      den Signalverlauf eines einen Rauschanteil aufweisenden am Eingang des Signaldetektors anliegenden Signals und den dazugehörigen Verlauf der Autokorrelationsfunktion;

Fig. 7      ein Blockschaltbild des Aufbaus eines Signaldetektors in Analogie zum Stand der Technik;

Fig. 8A     den Signalverlauf eines einen Rauschanteil aufweisenden am Eingang des Signaldetektors anliegenden Signals;

Fig. 8B     den Verlauf der Autokorrelation des autokorrelierten Signals aus Figur 8A;

Fig. 8C     den Verlauf der Kreuzkorrelation des kreuzkorrelierten Signals aus Figur 8A; und

Fig. 9      in Form eines Blockschaltbilds den Aufbau eines erfindungsgemäßen Signaldetektors.

Auf die Beschreibung der Figuren 1 bis 7 wird im folgenden nicht weiter eingegangen, sondern bezüglich der Erfindung auf die oben hierzu bereits gemachten Erläuterungen verwiesen.

Falls der Übertragungskanal nur eine geringe Verzerrung aufweist, ist es möglich, einen der beiden Faktoren in Gleichung (1) vom Rauschen zu befreien. In diesem Fall ist das empfangene Signal bekannt und es gleicht dem ausgesendeten Signal, vgl. hierzu Figur 4. Somit lässt sich auch anhand der folgenden Gleichung das Nutzsignal erkennen:

$$c_2(t) \;=\; \left| \sum_{t_i}^{t_i+T} s(t)\,(b^*(t)\,) \right| \qquad\qquad (4)$$

wobei $b(t)$ ein T Sekunden langer Signalanteil des bekannten ausgesendeten Signals ist. Dieser Signalanteil können zum Beispiel die Signale bzw. Symbole $t_1$ und $t_2$ der Präambel STP oder auch ein anderer im Empfänger bekannter Signalabschnitt des gesendeten Signals sein. Ferner kann anstelle von $b(t)$ in Gleichung (4) auch ein aus $b(t)$ abgeleitetes oder transformiertes Signal verwendet werden, z.B. $sgn(b(t))$, wobei $sgn(\cdot)$ die Vorzeichenfunktion ist.

Die Gleichung (4) beschreibt die Kreuzkorrelation des Signals $s(t)$ mit dem bekannten Signal $b(t)$ (bzw. einem von dem bekannten Signal $b(t)$ abgeleiteten Signal). Üblicherweise wird die Kreuzkorrelation zur Synchronisation verwendet. Bei der erfindungsgemäßen Lösung dient sie jedoch zur Erkennung des Nutzsignals.

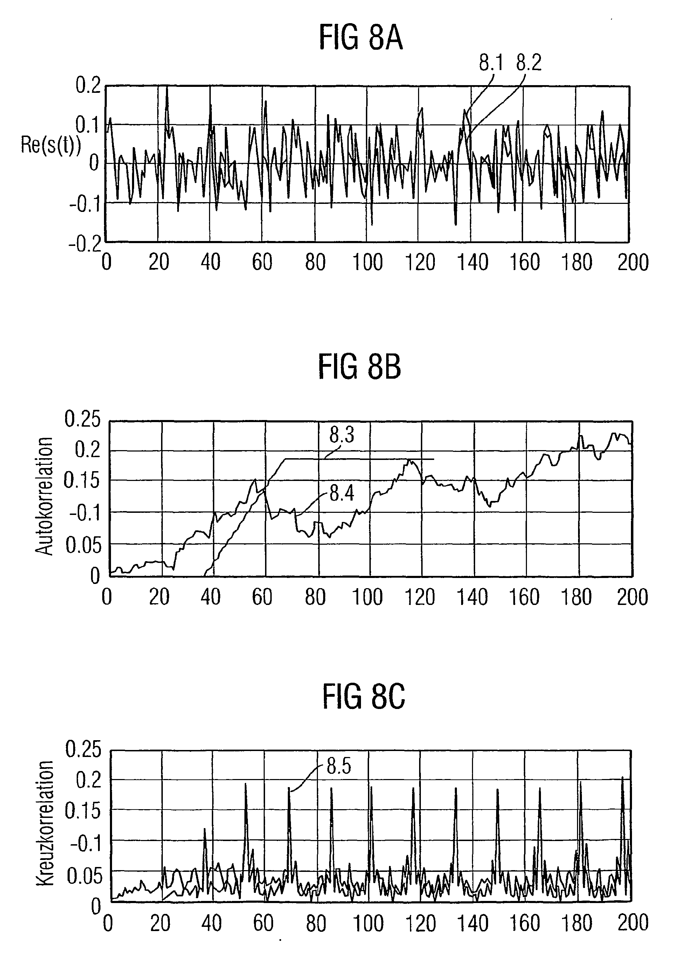

In Figur 8A ist das Nutzsignal 8.1, welches mit einem Rauschsignal 8.2 überlagert ist, gezeigt. Es sind nur die Realteile der beiden Signale dargestellt. Auf der x-Achse des Zeitdiagramms ist der Abtastwerte-Index (Abtastrate 20 MHz) aufgetragen und auf der y-Achse ist die reelle Amplitude des Gesamtsignals $s(t)$ aufgetragen. Beim Abtastwert mit Index 20 tritt das Nutzsignal 8.1 auf. Es wird deutlich, dass das Nutzsignal 8.1 im Rauschen nahezu "untergeht", d.h. dass ein geringes SNR vorliegt.

In Figur 8B ist der Verlauf der Autokorrelation gemäß Gleichung (2) gezeigt. Auch hier ist auf der x-Achse der Abtastwerte-Index und auf der y-Achse die Amplitude aufgetragen. Dabei zeigt der Verlauf 8.3 den erwarteten Verlauf der Autokorrelation für das rauschfreie Nutzsignal. Die Autokorrelation des mit einem Rauschsignal behafteten Nutzsignals ist als Signalverlauf 8.4 dargestellt. Es ist deutlich zu erkennen, dass der Signalverlauf 8.4 stark vom erwarteten Signalverlauf 8.3 abweicht. Unter bestimmten Bedingungen wird der leistungsangepasste Schwellenwert nach Gleichung (3) nicht rechtzeitig erreicht, was einem Fehler beim Signalempfang entspricht (der leistungsangepasste Schwellenwert $p(t)*thr\_ac$ muss relativ hoch sein, um die Wahrscheinlichkeit für eine fehlerhafte Detektion gering zu halten).

Im Zeitdiagramm in Figur 8C ist der Verlauf 8.5 der Kreuzkorrelation für das in Figur 8A dargestellte Signal gezeigt. Auch hier ist auf der x-Achse der Abtastwerte-Index und auf der y-Achse die Amplitude aufgetragen. Der bekannte Signalteil $b(t)$, nachfolgend auch als Filter $b(t)$ bezeichnet, wurde aus den beiden Signalen $t_1$ und $t_2$ in Figur 3 gebildet. Die Maxima in Figur 8C, die unabhängig von der Filterlänge sind, treten alle 0,8 $\mu s$ auf. Ihre Werte werden durch das Rauschen nicht stark verzerrt. Wie bereits erwähnt, werden diese Maxima normalerweise benutzt, um ein Signal zu synchronisieren. Im vorliegenden Fall werden sie jedoch zur Erkennung bzw. Detektion des Nutzsignals verwendet. Dazu wird ein gegenüber dem bei der Autokorrelation verwendeten Schwellwert $thr\_ac$ anderer Schwellenwert $thr\_cc$ gewählt. Der gewählte Schwellenwert $thr\_cc$ muss sicherstellen, dass mit einer bestimmten Wahrscheinlichkeit eine falsche Detektion ausgeschlossen ist.

Wie auch in Gleichung (1) hängt der Ausgangswert $c_2(t)$ der Gleichung (4) von der Signalstärke ab. Da in Gleichung (4) jedoch nur einer der beiden Faktoren von der Signalstärke abhängt, ist die Amplitude des Signals $s(t)$ und nicht dessen Leistung zu berücksichtigen. Dies kann zum Beispiel dadurch geschehen, dass die Quadratwurzel aus $p(t)$ gemäß Gleichung (2) gezogen und für die Skalierung des Schwellenwertes $thr\_cc$ verwendet wird.

Alternativ dazu ist es auch möglich, mittels einer Näherung zu arbeiten. Für die Näherung der Signalamplitude kann die folgende Gleichung verwendet werden:

$$m(t) \;=\; \sum_{t_i}^{t_i+T} \left( \left| Re\,(s(t)\,) \right| + \left| Im\,(s(t)\,) \right| \right) \qquad\qquad (5)$$

Dies führt zu einem weiteren Detektionskriterium:

$$c_2(t) \geq m(t)*thr\_cc \qquad\qquad (6)$$

wobei thr_cc der zweite Schwellenwert (Schwellenwert für die Kreuzkorrelation) ist.

D.h., sobald Korrelationsspitzen auftreten, die das Produkt m(t)*thr_cc übertreffen, wird eine Detektion des Nutzsignals angenommen. Zudem kann die Periode dieser Maxima für einen robusteren Algorithmus zur Nutzsignalerkennung herangezogen werden.

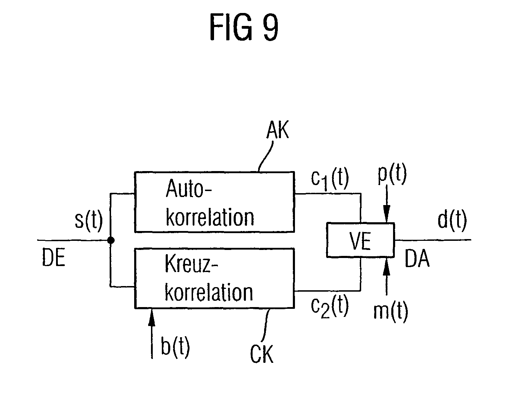

Die beiden Detektionskriterien gemäß den Gleichungen (3) und (6) werden z.B. mittels einer ODER-Verknüpfung verknüpft. Ein entsprechendes Blockschaltbild ist in Figur 9 gezeigt. Das Eingangssignal s(t), das am Eingang DE des Detektors anliegt, wird sowohl einer Autokorrelationseinheit AK als auch einer Kreuzkorrelationseinheit CK zugeführt. Die Ausgangssignale $c_1(t)$ bzw. $c_2(t)$ der beiden Korrelationseinheiten AK und CK werden mittels einer Verknüpfungseinheit VE miteinander verknüpft. Die Verknüpfungseinheit VE überprüft die Bedingungen gemäß Gleichungen (3) und (6) und erzeugt intern jeweils einen logischen Zustand "1", sofern die jeweilige Bedingung erfüllt ist. Diese logischen Signale werden in der Verknüpfungseinheit VE ODER-verknüpft. Am Ausgang DA des (nicht gesondert dargestellten) ODER-Glieds, welcher auch den Ausgang des Detektors 3 bildet, ist ein Detektionssignal d(t) abgreifbar, das eine Information über das Vorhandensein des Nutzsignals liefert. Liegt der Ausgang DA des ODER-Glieds auf dem logischen Zustand "1", kann dies als Vorhandensein des Nutzsignals interpretiert werden.

Mit der erfindungsgemäßen Lösung kann das Nutzsignal nunmehr auch unter den vielfältigsten Bedingungen sicher und schnell erkannt werden. Die erfindungsgemäße Lösung arbeitet sowohl bei verzerrten Kanälen mit hohen SNR-Anforderungen als auch bei nahezu idealen Kanälen, bei denen das erlaubte SNR sehr niedrig sein kann, korrekt. Dies führt zu einer Erhöhung der Anzahl korrekt empfangener Bursts. Die Anzahl der erneut zu übertragenden Bursts sinkt. Infolgedessen wird eine bessere Nutzung der verfügbaren Bandbreite mit einem größeren Datendurchsatz erreicht.

Durch die Hinzunahme des auf der Kreuzkorrelation beruhenden Kriteriums (Gleichung 6) wird auch die Wahl eines geeigneten Schwellenwerts thr_ac für die Autokorrelation einfacher, da dieser auf einem höheren Wert belassen werden kann, um eine geringere Wahrscheinlichkeit für eine fehlerhafte Detektion zu erreichen.

An Stelle des ODER-Glieds zur Verknüpfung der beiden Korrelationseinheiten AK und CK können die beiden Ausgänge der Korrelationseinheiten AK und CK auch mittels einer Gewichtungseinheit miteinander verknüpft werden. Die Gewichtung der Ausgangssignale $c_1(t)$ bzw. $c_2(t)$ kann zusätzlich zu der Skalierung, d.h. der Berücksichtigung der Signalleistung bzw. der Signalamplitude entsprechend den Gleichungen (3) und (6), erfolgen. Die Verknüpfung kann z.B. eine Schwellenwertentscheidung der skalierten, gewichteten und addierten Ausgangssignale $c_1(t)$ und $c_2(t)$ der Autokorrelationseinheit AK und der Kreuzkorrelationseinheit CK sein.

Durch die Gewichtung lässt sich der relative Einfluss der beiden Detektionsmechanismen (Autokorrelation, Kreuzkorrelation) auf die Entscheidung nach Wunsch einstellen.

Der erfindungsgemäße Signaldetektor 3, wie er in Figur 8 gezeigt ist, kann mit seinem Eingang DE mit dem Ausgang des Analog-Digital-Wandlers 2 verbunden sein, siehe Fig. 2. An dem Eingang DE des Detektors 3 ist dann das Eingangssignal s(t) anlegbar, welches das digitale komplexe Ausgangssignal des Analog-Digital-Wandler 2 ist.

Die in Figur 9 gezeigte Ausführungsform der Erfindung ist nicht darauf beschränkt, ausschließlich das Nutzsignal gemäß den beiden oben genannten Spezifikationen zu detektieren. Die Erfindung kann auch für die Detektion von reellen Signalen verwendet werden.

Ferner wird darauf hingewiesen, dass in der vorliegenden Schrift der Begriff "Autokorrelation" nicht nur die in Gleichung (1) angegebene Korrelation des Signals s(t) mit sich selbst sondern auch die Korrelation des Signals s(t) mit einem vom Signal s(t) abgeleiteten (zeitverzögerten und konjugiert komplexen) Signal einbezieht. Damit ist gemeint, dass das Autokorrelationssignal $c_1(t)$ z.B. auch gemäß der Gleichung

$$c_1(t) = \left| \sum_{t_i}^{t_i+T} s(t)\,(sgn(s(t-\tau)))^* \right| \qquad\qquad (7)$$

gebildet werden kann, wobei sgn(x) das Vorzeichen des komplexen Signals s(t) bedeutet und im komplexwertigen Fall gemäß

$$sgn(x) = sgn(Re(x)) + j \cdot sgn(Im(x)) \qquad\qquad (8)$$

definiert ist. Dabei bezeichnet j die imaginäre Einheit. Da die Amplitude des Signals sgn(s(t-τ))* konstant ist, ist in diesem Fall im übrigen eine Skalierung des Autokorrelationssignals $c_1(t)$ mit der mittleren Signalamplitude m(t) und nicht mit der Leistung p(t) durchzuführen. D.h., die Einheit zur Leistungsschätzung 13 kann entfallen, es wird lediglich eine Einheit zur Signalamplitudenschätzung gemäß Gleichung (5) benötigt, welche wesentlich aufwandsgünstiger als die Einheit 13 zur Leistungsschätzung implementierbar ist.

Ferner wird betont, dass in vielen Fällen die für die Erfindung erforderliche Hardware teilweise oder sogar vollständig bereits im Empfänger vorhanden ist, da für die Kreuzkorrelation die bereits vorhandene Kreuzkorrelatorschaltung für die Signalsynchronisation mitverwendet werden kann.

**Patentansprüche**

1. Vorrichtung zur Erkennung des Vorhandenseins eines Nutzsignals, in welchem ein periodisches Signal enthalten ist, mit

   - einer Autokorrelationseinheit (AK) zum Autokorrelieren eines Signals (s(t)), in welchem das Nutzsignal vorhanden sein kann,
   - einer Kreuzkorrelationseinheit (CK) zum Kreuzkorrelieren des Signals (s(t)) mit einem bekannten Signal (b(t)), und
   - einer Verknüpfungseinheit (VE) zum Verknüpfen der Ausgänge der Autokorrelationseinheit (AK) und der Kreuzkorrelationseinheit (CK), die ein Verknüpfungssignal (d(t)) ausgibt, welches angibt, ob das Nutzsignal in dem Signal (s(t)) vorhanden ist.

2. Vorrichtung nach Anspruch 1,
   **dadurch gekennzeichnet,**
   **dass** die Vorrichtung eine Amplitudenschätzeinheit zur Schätzung der Amplitude des Signals (s(t)) umfasst, und
   **dass** das von der Amplitudenschätzeinheit ausgegebene Amplitudenschätzssignal der Verknüpfungseinheit (VE) zugeführt ist.

3. Vorrichtung nach Anspruch 1 oder 2,
   **dadurch gekennzeichnet,**
   **dass** die Vorrichtung eine Leistungsschätzeinheit (13) zur Schätzung der Leistung des Signals (s(t)) umfasst, und
   **dass** das von der Leistungsschätzeinheit (13) ausgegebene Leistungsschätzsignal der Verknüpfungseinheit (VE) zugeführt ist.

4. Vorrichtung nach einem der vorhergehenden Ansprüche,
   **dadurch gekennzeichnet,**
   **dass** die Verknüpfungseinheit (VK) umfasst:

   - eine der Autokorrelationseinheit (AK) nachgeschaltete erste Entscheidungseinheit (14), welche ein erstes logisches Signal ausgibt, das angibt, ob das Nutzsignal durch Autokorrelation erkannt wurde,
   - eine der Kreuzkorrelationseinheit (CK) nachgeschaltete zweite Entscheidungseinheit, welche ein zweites logisches Signal ausgibt, das angibt, ob das Nutzsignal durch Kreuzkorrelation erkannt wurde, und
   - ein den beiden Entscheidungseinheiten nachgeschaltetes ODER-Glied, das das Verknüpfungssignal (d(t)) ausgibt.

5. Vorrichtung nach einem der vorhergehenden Ansprüche,
   **dadurch gekennzeichnet,**
   **dass** die Verknüpfungseinheit (VE) so ausgebildet ist, dass sie das Ausgangssignal ($c_1(t)$) der Autokorrelationseinheit (AK) und das Ausgangssignal ($c_2(t)$) der Kreuzkorrelationseinheit (CK) jeweils gewichtet und die gewichteten Ausgangssignale zur Erzeugung des Verknüpfungssignals (d(t)) verknüpft.

6. Vorrichtung nach Anspruch 5,
   **dadurch gekennzeichnet,**
   **dass** die Verknüpfung eine Addition der gewichteten Ausgangssignale ($c_1(t)$; $c_2(t)$) mit nachfolgender Schwellenwertentscheidung ist.

7. Vorrichtung nach einem der vorhergehenden Ansprüche,

**dadurch gekennzeichnet,**
**dass** das für die Kreuzkorrelation verwendete bekannte Signal (b(t)) das periodische Signal des zu erkennenden Nutzsignals oder ein aus diesem Signal durch eine Signaltransformation, insbesondere Vorzeichenbildung, gewonnenes Signal ist.

8. Verfahren zur Erkennung des Vorhandenseins eines Nutzsignals, in welchem ein periodisches Signal enthalten ist,

   - bei dem ein Signal (s(t)), in welchem das Nutzsignal vorhanden sein kann, mittels Autokorrelation mit sich selbst korreliert und ein Autokorrelationssignal ($c_1$(t)) gebildet wird;
   - bei dem das Signal (s(t)) mittels Kreuzkorrelation mit einem bekannten Signal (b(t)) korreliert und ein Kreuzkorrelationssignal ($c_2$(t)) gebildet wird;
   - bei dem das Autokorrelationssignal ($c_1$(t)) und das Kreuzkorrelationssignal ($c_2$(t)) miteinander verknüpft werden und ein Verknüpfungssignal (d(t)) gebildet wird, das angibt, ob das Nutzsignal in dem Signal (s(t)) vorhanden ist.

9. Verfahren nach Anspruch 8,
   **dadurch gekennzeichnet,**
   **dass** die Amplitude des Signals (s(t)) geschätzt wird, und dass das Verknüpfungssignal (d(t)) abhängig von dem Ergebnis der Amplitudenschätzung ist.

10. Verfahren nach Anspruch 8 oder 9,
    **dadurch gekennzeichnet,**
    **dass** die Leistung des Signals (s(t)) geschätzt wird, und dass das Verknüpfungssignal (d(t)) abhängig von dem Ergebnis der Leistungsschätzung ist.

11. Verfahren nach einem der Ansprüche 8 bis 10,
    **dadurch gekennzeichnet,**

    - **dass** in Abhängigkeit von dem Autokorrelationssignal ($c_1$(t)) ein erstes logisches Signal gebildet wird, das angibt, ob das Nutzsignal durch Autokorrelation erkannt wurde,
    - **dass** in Abhängigkeit von dem Kreuzkorrelationssignal ($c_2$(t)) ein zweites logisches Signal gebildet wird, das angibt, ob das Nutzsignal durch Kreuzkorrelation erkannt wurde, und
    - **dass** die beiden logischen Signale zur Bildung des Verknüpfungssignals (d(t)) durch eine ODER-Operation verknüpft werden.

12. Verfahren nach einem der Ansprüche 8 bis 11,
    **dadurch gekennzeichnet,**
    **dass** zur Bildung des Verknüpfungssignals das Autokorrelationssignal ($c_1$(t)) und das Kreuzkorrelationssignal ($c_2$(t)) jeweils gewichtet und das gewichtete Autokorrelationssignal und das gewichtete Kreuzkorrelationssignal zur Erzeugung des Verknüpfungssignals (d(t)) verknüpft werden.

13. Verfahren nach Anspruch 12,
    **dadurch gekennzeichnet,**
    **dass** das gewichtete Autokorrelationssignal und das gewichtete Kreuzkorrelationssignal zur Erzeugung des Verknüpfungssignals (d(t)) addiert und das addierte Signal einer Schwellenwertentscheidung unterzogen wird.

14. Verfahren nach einem der Ansprüche 8 bis 13,
    **dadurch gekennzeichnet,**
    **dass** das Nutzsignal ein Nutzsignal in einem drahtlosen lokalen Netzwerk, insbesondere gemäß dem Standard IEEE 802.11a oder dem Standard IEEE 802.11g oder dem Standard ETSI TS 101 761-1 (BRAN), Hiperlan Typ2, ist.

15. Verwendung der Vorrichtung nach einem der Ansprüche 1 bis 7 in einem drahtlosen lokalen Netzwerk, insbesondere gemäß dem Standard IEEE 802.11a oder dem Standard IEEE 802.11g oder dem Standard ETSI TS 101 761-1 (BRAN), Hiperlan Typ2.

**Claims**

1. Device for detecting the presence of a useful signal containing a periodic signal, comprising

- an autocorrelation unit (AK) for autocorrelating a signal (s(t)) in which the useful signal can be present,
- a cross-correlation unit (CK) for cross correlating the signal (s(t)) with a known signal (b(t)), and
- a logic unit (VE) for logically combining the outputs of the autocorrelation unit (AK) and of the cross correlation unit (CK) which outputs a combinatorial signal (d(t)) which indicates whether the useful signal is present in the signal (s(t)).

2. Device according to Claim 1, **characterized in that** the device comprises an amplitude estimating unit for estimating the amplitude of the signal (s(t)), and **in that** the amplitude estimation signal output by the amplitude estimating unit is supplied to the logic unit (VE).

3. Device according to Claim 1 or 2, **characterized in that** the device comprises a power estimating unit (13) for estimating the power of the signal (s(t)), and **in that** the power estimation signal output by the power estimating unit (13) is supplied to the logic unit (VE).

4. Device according to one of the preceding claims,
   **characterized in that** the logic unit (VK) comprises the following:

   - a first decision unit (14), connected downstream of the autocorrelation unit (AK), which outputs a first logical signal which indicates whether the useful signal has been detected by autocorrelation,
   - a second decision unit connected downstream of the cross correlation unit (CK), which outputs a second logical signal which indicates whether the useful signal has been detected by cross correlation, and
   - an OR element, connected downstream of the two decision units, which outputs the combinatorial signal (d(t)).

5. Device according to one of the preceding claims, **characterized in that** the logic unit (VE) is constructed in such a manner that it in each case weights the output signal ($c_1(t)$) of the autocorrelation unit (AK) and the output signal ($c_2(t)$) of the cross correlation unit (CK) and logically combines the weighted output signals in order to generate the combinatorial signal (d(t)).

6. Device according to Claim 5, **characterized in that** the logical combination is an addition of the weighted output signals ($c_1(t)$; ($c_2(t)$) followed by a threshold value decision.

7. Device according to one of the preceding claims, **characterized in that** the known signal (b(t)) used for the cross correlation is the periodic signal of the useful signal to be detected, or a signal obtained from this signal by a signal transformation, especially sign formation.

8. Method for detecting the presence of a useful signal containing a periodic signal,

   - in which a signal (s(t)), in which the useful signal can be present, is correlated with itself by means of autocorrelation, and an autocorrelation signal ($c_1(t)$) is formed;
   - in which the signal (s(t)) is correlated with a known signal (b(t)) by means of cross correlation, and a cross correlation signal ($c_2(t)$) is formed;
   - in which the autocorrelation signal ($c_1(t)$) and the cross correlation signal ($c_2(t)$) are logically combined with one another and a combinatorial signal (d(t)) is formed which indicates whether the useful signal is present in the signal (s(t)).

9. Method according to Claim 8, **characterized in that** the amplitude of the signal (s(t)) is estimated, and **in that** the combinatorial signal (d(t)) is dependent on the result of the amplitude estimation.

10. Method according to Claim 8 or 9, **characterized in that** the power of the signal (s(t)) is estimated, and **in that** the combinatorial signal (d(t)) is dependent on the result of the power estimation.

11. Method according to one of Claims 8 to 10, **characterized**

    - **in that**, depending on the autocorrelation signal ($c_1(t)$), a first logical signal is formed which indicates whether the useful signal has been detected by autocorrelation,
    - **in that**, depending on the cross correlation signal ($c_2(t)$), a second logical signal is formed which indicates whether the useful signal has been detected by cross correlation, and
    - **in that** the two logical signals are logically combined by an OR operation for forming the combinatorial signal (d(t)).

**12.** Method according to one of Claims 8 to 11, **characterized in that** for forming the combinatorial signal, the auto-correlation signal ($c_1$(t)) and the cross correlation signal ($c_2$(t)) are in each case weighted, and the weighted autocorrelation signal and the weighted cross correlation signal are logically combined for generating the combinatorial signal (d(t)).

**13.** Method according to Claim 12, **characterized in that** the weighted autocorrelation signal and the weighted cross correlation signal are added for generating the combinatorial signal (d(t)) and the added signal is subjected to a threshold decision.

**14.** Method according to one of Claims 8 to 13, **characterized in that** the useful signal is a useful signal in a wireless local area network, particularly according to the IEEE 802.11a standard or the IEEE 802.11g standard or the ETSI TS 101 761-1 (BRAN), Hiperlan Type 2, standard.

**15.** Use of the device according to one of Claims 1 to 7 in a wireless local area network, particularly according to the IEEE 802.11a standard or the IEEE 802.11g standard or the ETSI TS 101 761-1 (BRAN), Hiperlan type 2, standard.

**Revendications**

**1.** Dispositif de détection de la présence d'un signal utile, dans lequel un signal périodique est contenu, comprenant

- une unité (AK) d'autocorrélation pour l'autocorrélation d'un signal (s(t)) dans lequel le signal utile peut être présent,
- une unité (CK) de corrélation croisée pour la corrélation croisée du signal (s(t)) avec un signal (b(t)) connu, et
- une unité (VE) de combinaison pour combiner les sorties de l'unité (AK) de corrélation et de l'unité (CK) de corrélation croisée, qui émet un signal (d(t)) de combinaison, lequel indique si le signal utile est présent dans le signal (s(t)).

**2.** Dispositif suivant la revendication 1,
**caractérisé**
**en ce que** le dispositif comprend une unité d'évaluation d'amplitude pour évaluer l'amplitude du signal (s(t)), et
**en ce que** le signal d'évaluation d'amplitude émis par l'unité d'évaluation d'amplitude est envoyé à l'unité (VE) de combinaison.

**3.** Dispositif suivant la revendication 1 ou 2,
**caractérisé**
**en ce que** le dispositif comprend une unité (13) d'évaluation de puissance pour évaluer la puissance du signal (s(t)), et
**en ce que** le signal d'évaluation de puissance émis par l'unité (13) d'évaluation de puissance est envoyé à l'unité (VE) de combinaison.

**4.** Dispositif suivant l'une des revendications précédentes,
**caractérisé**
**en ce que** l'unité (VK) de combinaison comprend :

- une première unité (14) de décision, montée en aval de l'unité (AK) d'autocorrélation et émettant un premier signal logique, qui indique si le signal utile a été détecté par autocorrélation,
- une deuxième unité de décision, montée en aval de l'unité (CK) de corrélation croisée et émettant un deuxième signal logique, qui indique si le signal utile a été détecté par corrélation croisée, et
- un élément OU monté en aval des deux unités de décision et émettant le signal (d(t)) de combinaison.

**5.** Dispositif suivant l'une des revendications précédentes,
**caractérisé**
**en ce que** l'unité (VE) de combinaison est telle qu'elle pondère respectivement le signal ($c_1$(t)) de sortie de l'unité (AK) d'autocorrélation et le signal ($c_2$(t)) de sortie de l'unité (CK) de corrélation croisée et combine les signaux de sortie pondérés pour produire le signal (d(t)) de combinaison.

**6.** Dispositif suivant la revendication 5,
**caractérisé**
**en ce que** la combinaison est une addition des signaux ($c_1(t)$) ; ($c_2(t)$) de sortie pondérée suivant d'une décision de valeur de seuil.

**7.** Dispositif suivant l'une des revendications précédentes,
**caractérisé en ce que** le signal ($b(t)$) connu utilisé pour la corrélation croisée est le signal périodique du signal utile à détecter ou un signal obtenu à partir de ce signal par une transformation du signal, notamment par une formation de signe.

**8.** Procédé de détection de la présence d'un signal utile, dans lequel un signal périodique est contenu,

- dans lequel on autocorrèle au moyen d'une autocorrélation un signal ($s(t)$) dans lequel le signal utile pour être présent et on forme un signal ($c_1(t)$) d'autocorrélation,
- dans lequel on corrèle le signal ($s(t)$) au moyen d'une corrélation croisée un signal ($b(t)$) connu et on forme un signal ($c_2(t)$) de corrélation croisée,
- dans lequel on combine entre eux le signal ($c_1(t)$) d'autocorrélation et le signal ($c_2(t)$) de corrélation croisée et on forme un signal ($d(t)$) de combinaison qui indique si le signal utile est présent dans le signal ($s(t)$).

**9.** Procédé suivant la revendication 8,
**caractérisé**
**en ce que** l'on évalue l'amplitude du signal ($s((t)$), et
**en ce que** le signal ($d(t)$) de combinaison dépend du résultat de l'évaluation d'amplitude.

**10.** Procédé suivant la revendication 8 ou 9,
**caractérisé**
**en ce que** l'on évalue la puissance du signal ($s(t)$), et
**en ce que** le signal ($d(t)$) de combinaison dépend du résultat de l'évaluation de puissance.

**11.** Procédé suivant l'une des revendications 8 à 10,
**caractérisé**

- **en ce que** l'on forme en fonction du signal ($c_1(t)$) d'autocorrélation, un premier signal logique qui indique si un signal utile a été reconnu par autocorrélation,
- **en ce que** l'on forme en fonction du signal ($c_2(t)$) de corrélation croisée, un deuxième signal logique qui indique si le signal utile a été détecté par corrélation croisée, et
- **en ce que** l'on combine les deux signaux logiques pour former le signal ($d(t)$) de combinaison par une opération OU.

**12.** Procédé suivant l'une des revendications 8 à 11,
**caractérisé**
**en ce que** pour former le signal de combinaison, on pondère le signal ($c_1(t)$) d'autocorrélation et le signal ($c_2(t)$) de corrélation croisée respectivement et on combine le signal d'autocorrélation pondéré au signal de corrélation croisée pondérée pour produire le signal ($d(t)$) de combinaison.

**13.** Procédé suivant la revendication 12,
**caractérisé**
**en ce que** l'on additionne le signal d'autocorrélation pondérée et le signal de corrélation croisée pondérée pour produire le signal ($d(t)$) de combinaison et on soumet le signal additionné à une décision de valeur de seuil.

**14.** Procédé suivant l'une des revendications 8 à 13,
**caractérisé en ce que** le signal utile d'un réseau local sans fil, notamment suivant la norme IEEE 802.11a ou la norme IEEE 802.11g ou la norme ETSI TS 101 761-1 (BRAN), Hiperlan Typ2.

**15.** Utilisation du dispositif suivant l'une des revendications 1 à 7, dans un réseau local sans fil, notamment suivant la norme IEEE 802.11a ou la norme IEEE 802.11g ou la norme ETSI TS 101 761-1 (BRAN), Hiperlan Typ2.

# FIG 1

# FIG 2

## FIG 3

STP    $8+8=16\mu s$    LTP

$10 \times 0.8 = 8\mu s$    $2 \times 0.8 + 2 \times 3.2 = 8\mu s$    $0.8 + 3.2 = 4.0\mu s$    $0.8 + 3.2 = 4.0\mu s$    $0.8 + 3.2 = 4.0\mu s$

$t_1$ $t_2$ $t_3$ $t_4$ $t_5$ $t_6$ $t_7$ $t_8$ $t_9$ $t_{10}$  |  GI2   $T_1$   $T_2$  |  GI   SIGNAL  |  GI   Data 1  |  GI   Data 2

# FIG 4

# FIG 5

# FIG 6

# FIG 7

# FIG 9

## FIG 8A

## FIG 8B

## FIG 8C

# FIG 9